# FASCICULE DE BREVET EUROPEEN

(11) **EP 3 853 154 B1**
(45) Date de publication et mention de la délivrance du brevet: **29.10.2025**
(21) Numéro de dépôt: 18934511.9
(22) Date de dépôt: 19.09.2018
(51) Int. Cl.: B65G 13/10, B65G 39/12, B65G 47/244, B65G 47/54, B65G 39/00

(54) **DISPOSITIF ET PROCEDE DE CONVOYAGE DE PRODUITS**
VORRICHTUNG UND VERFAHREN ZUM FÖRDERN VON PRODUKTEN
DEVICE AND METHOD FOR CONVEYING PRODUCTS

(43) Date de publication de la demande: 28.07.2021
(73) Titulaire: SIDEL CANADA INC., Laval, QC H7W 4V3 (CA)
(72) Inventeur: ADAM, Alex, Laval, Québec H7W 4V3 (CA)
(74) Mandataire: Sidel Group
(86) Numéro de dépôt international: PCT/IB2018/001082
(87) Numéro de publication internationale: WO 2020/058736

(56) Documents cités:
- EP-A1- 2 621 835
- EP-A2- 2 361 856
- EP-B1- 2 621 835
- WO-A1-2012/161963
- AT-U1- 15 448
- CN-Y- 2 391 857
- DE-A1- 102010 008 970
- DE-A1- 3 908 105
- FR-A1- 2 278 607
- JP-A- 2011 251 806
- JP-A- 2015 048 247
- JP-A- H0 826 471
- JP-A- H08 216 770
- JP-U- H0 213 025
- JP-U- H0 443 664
- JP-U- S5 011 280
- KR-A- 20110 024 779
- KR-A- 20120 065 299
- NL-A- 8 701 460
- US-A- 4 746 003
- US-A- 4 907 692
- US-A- 5 074 405
- US-A1- 2013 192 954
- US-B1- 6 340 083
- US-B2- 6 981 580

## Description

La présente invention entre dans le domaine du convoyage de produits au sein d'une ligne de production.

De tels produits consistent en des contenants, tels des flacons, bouteilles, bidons ou briques, ou encore des boîtes. Ces produits sont généralement constitués en matériau plastique, métallique ou bien en verre.

Les produits subissent une première phase dite de production au cours de laquelle ils sont finalisés à l'unité au travers d'une succession de plusieurs étapes au sein de modules correspondants, comme le remplissage, le bouchage et l'étiquetage.

Ensuite, lesdits produits prêts à l'usage subissent une deuxième étape de conditionnement en groupes, chaque groupe étant constitué par regroupement, en quinconce ou non, de plusieurs produits selon une disposition en matrice, généralement de forme globalement parallélépipédique carrée ou rectangle. Les produits d'un même groupe peuvent être maintenus ensemble par insertion au sein d'un conteneur, telle une caisse ou un carton, ou bien sous forme de fardeaux. Les fardeaux sont obtenus au travers d'une étape de fardelage, au moyen d'un module dédié de type fardeleuse. Les groupes de produits sont tout d'abord enrobés d'un film thermorétractable. De façon complémentaire, chaque groupe de produits peut être maintenu inférieurement au moyen d'un support formant un fond, par exemple une barquette cartonnée, positionnée généralement avant enrobage. Une fois enrobés, les groupes de produits traversent un four, toujours au sein de la fardeleuse, dans lequel le film se rétracte autour des produits formant ainsi un fardeau. Ces fardeaux ou caisses sont ensuite convoyés en vue de leur manutention et de leur transport, notamment jusqu'à une étape de palettisation, où plusieurs fardeaux ou caisses sont tout d'abord agencés côte à côte selon une configuration prédéfinie de sorte à former une couche de produits occupant sensiblement la superficie d'une palette. Ces couches sont alors gerbées ou empilées sur le dessus d'une palette.

Au sens de la présente invention, on entend par « produit » un contenant seul, telle une bouteille ou une brique, ainsi qu'un groupe de produits disposés au sein d'une barquette, d'une caisse ou bien regroupés sous forme de fardeau.

Dans ce contexte, les produits sont déplacés au travers d'un dispositif de convoyage le long de la ligne de production, entre deux modules amont et aval, par exemple entre la sortie d'une fardeleuse ou d'une encaisseuse et un module de palettisation.

Un dispositif de convoyage classique peut comprendre un tapis sous forme d'une bande sans fin, sur laquelle repose les produits, qui sont alors déplacés selon une seule direction longitudinale.

Pour différentes raisons, comme offrir une flexibilité au convoyage de produits de formats distincts entre différentes productions, ainsi que pour améliorer les déplacements et les cadences de production, ou encore pour préparer des couches de produits en vue de leur palettisation, il est souvent nécessaire de réorienter les produits lors de leur déplacement longitudinal. Une telle réorientation des produits peut aussi être nécessaire dans le cas d'opérations de division d'un flux de produits, lors du regroupement desdits produits par convergence, en particulier dans le cas d'un flux de produits circulant en multivoies.

Il convient donc de dévier la trajectoire des produits déplacés longitudinalement par le dispositif de convoyage, notamment selon une composante transversale afin d'orienter les produits vers la droite ou la gauche dudit dispositif, ou bien selon un mouvement rotatif afin de les faire tourner sur eux même.

On comprend aisément qu'un dispositif de convoyage classique, à bande sans fin, permet uniquement de faire circuler les produits selon son sens d'avancement, c'est-à-dire, sans les dévier.

Pour pallier cet inconvénient, il existe un dispositif de convoyage comprenant un tapis sous forme d'une bande sans fin, ledit tapis étant pourvu de rouleaux montés en rotation motorisée autour d'axes orientés selon la direction longitudinale d'avancement du convoyeur ou inclinés angulairement, notamment à 45°, vers la droite et/ou vers la gauche, par rapport à ladite direction longitudinale. Ainsi, un produit circulant sur un tel convoyeur peut être notamment dévié latéralement en fonction de l'actionnement en rotation des rouleaux ayant la même orientation. Un exemple d'un tel dispositif est décrit dans le document US 2001/0045346.

Toutefois, un problème majeur d'un tel convoyeur à rouleaux réside dans la motorisation complexe, sous la surface de convoyage, qui nécessite une maintenance régulière fastidieuse et complexe à mettre en œuvre. De plus, les rouleaux présentent un diamètre conséquent, empêchant la prise en charge de certains types de produits, qui plus est à l'unité, provoquant leur chute. Enfin, la surface de convoyage présente une épaisseur qui induit une courbure importante aux extrémités longitudinales du convoyeur, ménageant une interface avec les autres modules situés en amont et en aval, qu'il est nécessaire de combler, notamment par des plaques de glissement sur lesquelles les produits frottent et ne sont plus entraînés.

Une solution alternative réside dans un convoyeur modulaire constitué d'une juxtaposition de modules de forme hexagonale, les modules adjacents étant aboutés le long de leur bord respectif, formant une surface plane et fixe. Chaque module comprend trois roues, chacune orientée parallèlement à un bord de l'hexagone et séparée des autres roues par un bord contigu. Chaque roue présente une surface de roulement constituée de rouleaux tangentiels montés libres en rotation. Les trois roues sont motorisées indépendamment, permettant de dévier un produit lorsqu'il est supporté par une des roues par l'actionnement d'au moins une des autres roues du même module ou d'un module adjacent, voire des roues de plusieurs modules adjacents. Un exemple d'un tel dispositif est décrit dans le document WO 2014/012861.

Un tel convoyeur présente un inconvénient similaire, résidant dans l'espacement entre les roues, qui ne permet pas la prise en charge de certains types de produits et limite son convoyage à des produits encaissés en conteneurs rigides. De plus, la majeure partie de la surface du convoyeur est fixe, induisant un risque de basculement des produits quand ils ne sont pas supportés par au moins trois roues, venant alors frotter sur ladite surface fixe. Encore une fois, la motorisation propre à chaque roue rend complexe toute intervention de maintenance, même si elle peut être facilitée par le démontage du module à réparer. En outre, la gestion des directions et des sens de déplacement des produits est extrêmement complexe à mettre en œuvre, au travers de la combinaison des actionnements en rotation, à des vitesses variables de chacune des trois roues de chacun des modules. De plus, les vitesses d'actionnement sont limitées, empêchant le convoyage de produits selon des cadences élevées de production. Enfin, une telle installation, du fait des nombreux moteurs qu'elle comprend, engendre des coûts de fabrication et de maintenance conséquents.

On connait également des dispositifs de convoyage mettant en œuvre des assemblages de roues mecanum pour dévier la trajectoire de produits selon une autre direction de convoyage. Une portion située en aval d'un premier convoyeur comprend un assemblage de roues mecanum pour rediriger les produits vers un deuxième convoyeur, en aval, qui se trouve dans une nouvelle direction représentée qui est perpendiculaire à la direction initiale. De tels dispositifs sont décrits dans les documents JP2015048247A, JP2011251806 et JP H0826471A. JP2015048247 A divulgue les caractéristiques du préambule des revendications 1 et 9.

L'invention a pour but de pallier les inconvénients de l'état de la technique en proposant un dispositif de convoyage faisant intervenir une déviation des produits au travers d'une configuration particulière de roues mecanum équipant certaines sections d'un tel convoyeur.

A ce titre, une roue mecanum est un organe de roulement de forme globalement circulaire. Elle comprend un moyeu sous forme d'un axe creux, autour duquel est montée une jante. La particularité d'une roue mecanum réside dans une bande de roulement comprenant plusieurs rouleaux répartis régulièrement en périphérie, montés libres en rotation sur la jante, selon une inclinaison angulaire de quarante-cinq degrés (45°) par rapport à son axe.

Habituellement, les roues mecanum sont utilisées comme organes de roulement d'un véhicule, afin de lui conférer une mobilité accrue. Pour ce faire, quatre roues mecanum sont montées sur un châssis, selon une disposition parallélépipédique. De plus, elles sont motorisées indépendamment les unes des autres. Dès lors, il est possible en modifiant le sens et la vitesse de rotation de chaque roue mecanum, de faire avancer ou reculer longitudinalement le véhicule, mais aussi de lui appliquer un mouvement transversal orthogonalement ou en biais, ainsi que de le faire tourner en rotation sur lui-même, voire de combiner l'un et/ou l'autre de ces mouvements.

Dès lors, l'invention prévoit d'intégrer des roues mecanum à un dispositif de convoyage de manière à dévier les produits transportés. Pour ce faire, les roues mecanum sont regroupées identiquement par lots, chaque lot étant disposé spécifiquement par rapport au déplacement longitudinal de convoyage, de manière à induire une déviation particulière des produits, latéralement vers la droite ou la gauche, ou encore en rotation.

De plus, afin de simplifier le fonctionnement du dispositif de convoyage, l'invention prévoit une unique motorisation des lots de roues d'une même section de déviation, réduisant les coûts de fabrication et d'implantation, ainsi que les opérations de maintenance.

Pour ce faire, l'invention concerne un dispositif de convoyage de produits au sein d'une ligne de production, comprenant :
- au moins une section de déplacement longitudinal desdits produits ;
- au moins une autre section de déviation desdits produits par rapport audit déplacement longitudinal.

Un tel dispositif de convoyage se caractérise en ce que ladite autre section comprend une pluralité de roues mecanum, regroupées de façon compacte par lot de roues alignées selon une direction perpendiculaire à leur axe de rotation ;
- lesdites roues d'un même lot étant orientées de façon identique.

De plus, le dispositif de convoyage se caractérise en ce qu'il comprend un unique moyen de motorisation de l'ensemble des roues mécanum d'une même autre section.

Selon des caractéristiques additionnelles du dispositif de convoyage non limitatives, ladite autre section de déviation peut comprendre au moins deux lots de roues mecanum orientées identiquement, de manière à constituer une autre section de déviation latérale desdits produits vers la droite ou vers la gauche dudit dispositif.

Ladite autre section de déviation peut comprendre au moins deux lots de roues mecanum orientées symétriquement, de manière à constituer une autre section de déviation en rotation desdits produits.

Ledit dispositif de convoyage peut comprendre plusieurs autres sections de déviation différentes et indépendantes.

L'axe des roues mecanum d'une autre section peut être orthogonal ou aligné avec la direction du déplacement longitudinal.

Plusieurs roues de lots différents peuvent être contiguës le long de leur axe de rotation.

Au moins deux lots d'une même autre section sont séparés transversalement par au moins un convoyeur longitudinal.

Ledit convoyeur longitudinal peut comprendre un tapis pourvu de rouleaux montés libres en rotation et dont les axes de rotation sont orientés longitudinalement.

Ledit dispositif de convoyage peut comprendre au moins un guide latéral de glissement desdits produits.

L'invention concerne aussi un procédé de convoyage de produits au sein d'une ligne de production, dans lequel, au moins :
- on déplace longitudinalement les produits sur au moins une section ;
- on dévie lesdits produits par rapport au déplacement longitudinal sur au moins une autre section.

Un tel procédé de convoyage se caractérise en ce que :
- on dispose au niveau de ladite autre section d'une pluralité de roues mecanum, regroupées de façon compacte par lot de roues alignées selon une direction perpendiculaire à leur axe de rotation ;
et en ce que :
- on actionne les roues mecanum d'une même autre section par un unique moyen de motorisation.

D'autres caractéristiques et avantages de l'invention ressortiront de la description détaillée qui va suivre des modes de réalisation non limitatifs de l'invention, en référence aux figures annexées dans lesquelles :

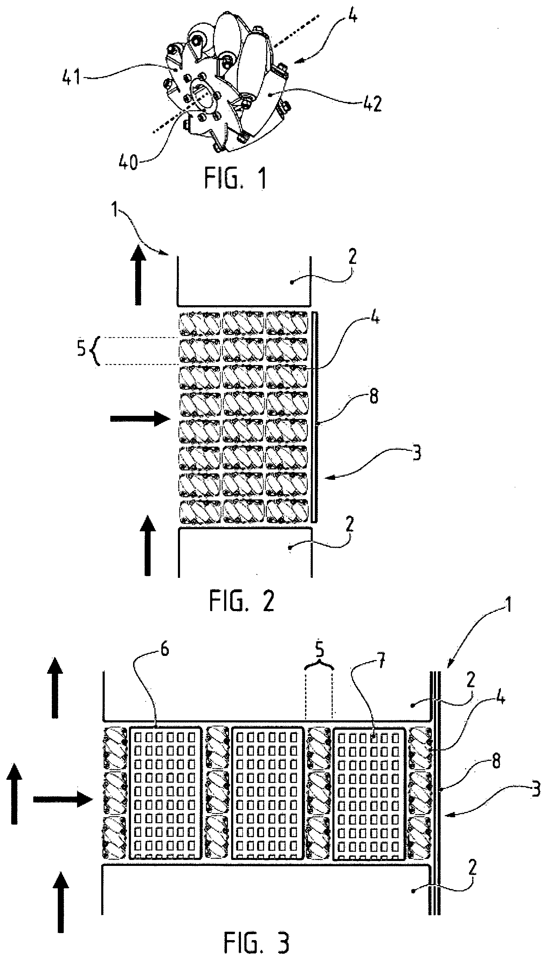

- la figure 1 représente schématiquement une vue en perspective d'une roue mecanum ;
- la figure 2 représente schématiquement une vue de dessus d'un dispositif de convoyage selon un premier exemple qui ne fait pas partie de l'invention, montrant une section de déplacement longitudinal amont et une section de déplacement longitudinal aval entre lesquelles s'étend une autre section de déviation des produits, ladite autre section étant uniquement pourvue de lots de roues mecanum ;
- la figure 3 représente schématiquement une vue de dessus d'un dispositif de convoyage selon un premier mode de réalisation, où une autre section de déviation comprend des lots de roues mecanum séparés par des convoyeurs longitudinaux, lesdites roues mecanum étant orientées de manière à conférer aux produits convoyés une première direction de déviation, par exemple vers la droite ;

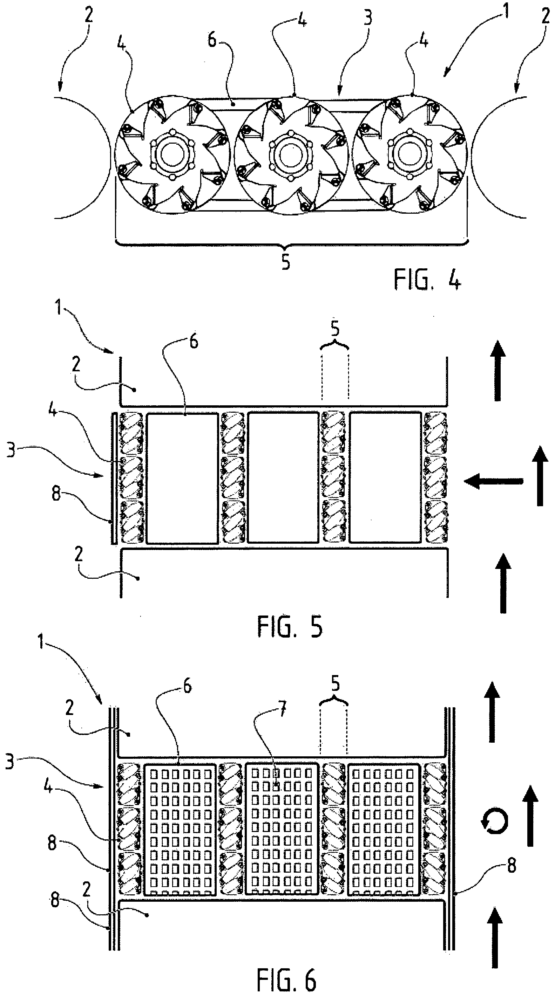

- la figure 4 représente schématiquement une vue en coupe verticale de la figure 3, montrant notamment un lot de trois roues mecanum, en affleurement avec la surface d'un convoyeur ;
- la figure 5 représente schématiquement une vue de dessus d'un dispositif de convoyage selon un deuxième mode de réalisation, montrant des lots de roues mecanum séparés par des convoyeurs longitudinaux, lesdites roues mecanum étant orientées de manière à conférer aux produits convoyés une seconde direction de déviation, par exemple vers la gauche ;
- la figure 6 représente schématiquement une vue de dessus d'un dispositif de convoyage selon un troisième mode de réalisation, montrant des lots de roues mecanum séparés par des convoyeurs longitudinaux pourvus de rouleaux libres, avec deux lots dont les roues présentent une première orientation, tandis que deux autres lots sont disposés symétriquement avec leurs roues mecanum orientées différemment. Les roues mecanum représentées sur cette figure sont orientées de manière à conférer aux produits convoyés une déviation en rotation ; et

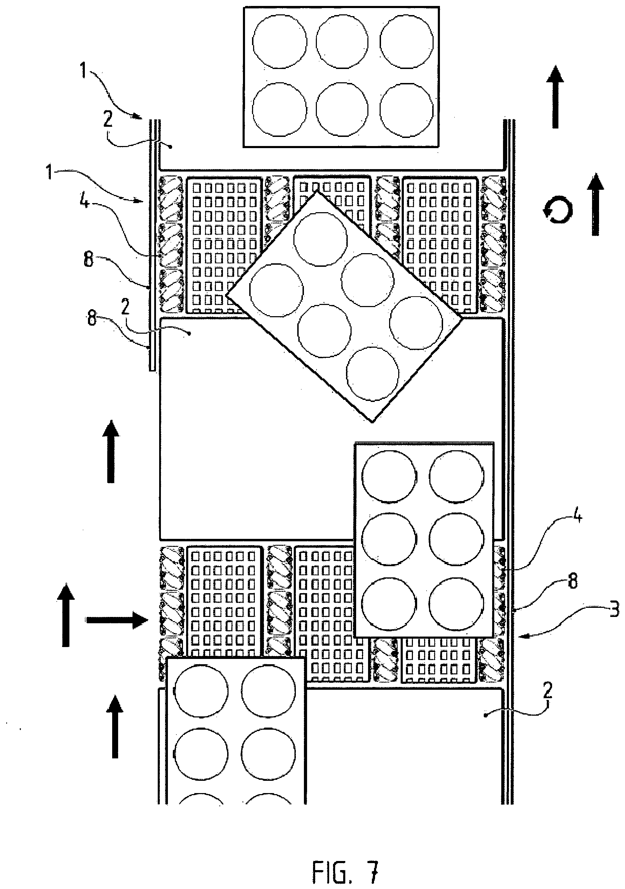

- la figure 7 représente schématiquement en vue de dessus un dispositif de convoyage selon un quatrième mode de réalisation, avec plusieurs autres sections de déviations distinctes disposées entre des sections de déplacement longitudinales.

La présente invention concerne le convoyage de produits au sein d'une ligne de production.

De tels produits peuvent être des contenants, tels des flacons, bouteilles, bidons ou briques, ou encore des boîtes. Les produits peuvent être convoyés à l'unité ou par groupe, notamment au sein de conteneurs, telle une caisse, ou bien maintenus ensemble en fardeau.

A cet effet, l'invention concerne un dispositif de convoyage 1. Les produits sont transportés en face supérieure d'un tel dispositif 1.

Le dispositif de convoyage 1 comprend au moins une section 2 de déplacement longitudinal des produits. Ce déplacement longitudinal s'opère depuis un module amont vers un module aval.

Le dispositif de convoyage 1 comprend une section 2 en amont et une section 2 en aval. En outre, le sens de déplacement longitudinal est schématisé par des flèches s'étendant verticalement depuis le bas vers le haut.

Chaque section 2 peut être constituée par une surface de convoyage adaptée, comme par exemple un tapis à bande sans fin. Chaque section 2 peut avoir une motorisation dédiée avec une vitesse d'avancement propre.

Le dispositif de convoyage 1 comprend au moins une autre section 3 de déviation desdits produits, par rapport audit déplacement longitudinal. En d'autres termes, une autre section 3 confère aux produits qui y sont transportés, un déplacement supplémentaire selon une direction différente de la direction de déplacement longitudinal d'une section 2.

La direction de déviation peut être transversale, par rapport à ladite direction longitudinale de déplacement, selon une résultante inclinée angulairement. Selon le premier exemple et le premier mode de réalisation représentés respectivement sur les figures 1 et 2, la direction de déviation est transversale, orientée orthogonalement vers la droite. Selon le deuxième mode de réalisation, représenté sur la figure 5, la direction de déviation est transversale, orientée orthogonalement vers la gauche.

La direction de déviation peut aussi appliquer un mouvement en rotation aux produits, comme visible sur l'exemple du troisième mode de réalisation de la figure 6.

On notera que la composante de déviation peut s'appliquer de façon combinée au mouvement longitudinal, conférant une résultante angulairement inclinée ou plus complexe, comme dans le cas d'une translation combinée avec une rotation.

De façon additionnelle, il est aussi possible d'annuler momentanément la composante longitudinale d'avancement des produits le long du dispositif 1 de convoyage, notamment en appliquant une déviation selon une composante opposée, à savoir vers l'arrière, combinée avec au moins une composante transversale permettant de dévier latéralement les produits et/ou de les faire tourner sur eux-mêmes.

De surcroît, une autre section 3 correspond uniquement à une direction de déviation donnée. Dès lors, afin d'appliquer à un produit plusieurs direction de déviations distinctes, il convient de le convoyer le long d'autant d'autres sections 3.

En outre, plusieurs autres sections 3 peuvent se suivre l'une derrière l'autre, ou bien être séparées par une ou plusieurs section 2.

Comme indiqué précédemment, ladite autre section 3 comprend une pluralité de roues mecanum 4.

Un exemple de roue mecanum 4 est représenté en figure 1. Comme évoqué précédemment, une roue mecanum 4 est un organe de roulement de forme globalement circulaire. Elle comprend un moyeu 40 sous forme d'un axe creux, autour duquel est montée une jante 41. L'axe creux du moyeu 40 est destiné à recevoir un arbre d'entraînement en rotation selon l'axe de rotation de ladite roue mecanum 4. L'axe de rotation est modélisé schématiquement par des tirets sur la figure 1. La particularité d'une roue mecanum réside dans une bande de roulement comprenant plusieurs rouleaux 42 répartis régulièrement en périphérie, montés libres en rotation sur la jante 41, selon une inclinaison angulaire de 45° par rapport à son axe.

Comme visible sur l'exemple de la figure 1, chaque jante 41 présente une forme étoilée, dont les pointes reçoivent les extrémités des axes de rotation libre des rouleaux 42. De plus, les rouleaux 42 présentent une forme oblongue et convexe.

Les roues mecanum 4 sont regroupées de façon compacte par lot 5 de roues mecanum 4 alignées selon une direction perpendiculaire à leur axe de rotation. En d'autres termes, les roues mecanum 4 d'un même lot 5 sont disposées côte à côte, moyennant un jeu autorisant la rotation sans contact entre elles. Les axes de rotation des roues mecanum 4 d'un même lot 5 s'étendent parallèlement. De plus, tous les axes de rotation des roues mecanum 4 d'un même lot 5 s'étendant dans un même plan, de préférence un plan horizontal.

Un même lot 5 comprend plusieurs roues mecanum 4, à savoir au moins deux roues mecanum 4, de préférence mais non limitativement au moins trois roues, comme représenté dans les modes de réalisations visibles sur les figures 3 à 6 et sur l'exemple représente sur la figure 2.

De surcroît, les roues mecanum 4 d'un même lot 5 sont orientées de façon identique. En d'autres termes, pour un même lot 5, ses roues mecanum 4 sont positionnées les unes derrière les autres avec leurs rouleaux 42 dans le même sens.

Les lots 5 d'une même autre section 3 peuvent avoir une orientation identique de leurs roues mecanum 4, ou bien opposée selon la déviation que l'on souhaite imposer aux produits. Comme visible sur certains modes de réalisations visibles sur les figures 3 ou 5 et sur l'exemple représente sur la figure 2, les lots 5 de chaque autre section 3 sont orientés dans le même sens. Selon le troisième mode de réalisation visible sur la figure 6, des lots 5 présentent des orientations différentes de leurs roues mecanum 4.

Chaque autre section 3 peut comprendre plusieurs lots 5.

Les lots 5 peuvent être contigus, accolés les uns aux autres moyennant un jeu permettant la rotation des roues. Une telle configuration est représentée sur l'exemple de la figure 2, montrant à titre d'exemple une autre section 3 constituée de huit lots 5 de trois roues mecanum 4 chacun. De plus, les axes de rotation des roues mecanum 4 sont orientés selon la direction longitudinale, à savoir verticalement dans l'exemple de cette représentation.

Dès lors, l'axe des roues mecanum 4 d'une autre section 3 est orthogonal ou aligné avec la direction du déplacement longitudinal.

Les lots 5 sont séparés par un convoyeur longitudinal 6. Un convoyeur 6 est situé de façon intermédiaire entre deux lots 5. Une telle configuration est visible sur les figures 3, 5 et 6. Selon une autre configuration, non représentée, qui ne fait pas partie de l'invention un convoyeur 6 peut être situé en bord du dispositif 1, n'ayant alors que son bord opposé bordé par un ou plusieurs lots 5 de roues mecanum 4.

Selon encore une autre configuration, non représentée, un même convoyeur 6 peut s'étendre le long de plusieurs autres sections 3 successives.

Un tel convoyeur 6 est entraîné selon la direction longitudinale.

A ce titre, selon un exemple de réalisation, comme visible sur la figure 5, ledit convoyeur longitudinal 6 peut être de type à bande sans fin. Il comprend un tapis destiné à recevoir uniquement en face supérieure une partie de chaque produit.

Selon un autre mode de réalisation préférentiel, comme visible sur les figures 3 et 6, le convoyeur 6 peut comprendre un tapis pourvu de rouleaux 7 montés libres en rotation et dont les axes de rotation sont orientés longitudinalement. Ainsi, les rouleaux 7 accompagnent le déplacement en déviation des produits, du fait de leur roulement, tout en appliquant la composante longitudinale d'entraînement dudit convoyeur 6. La surface du convoyeur 6 constitue alors une sole de roulement.

Selon une réalisation préférentielle, comme visible sur les modes représentés sur les figures 3, 5 et 6, et sur l'exemple représente sur la figure 2, le dispositif 1 peut comprendre au moins un guide latéral 8 de glissement des produits. Un tel guide 8 est positionné le long d'un bord d'une autre section 3, assurant le référencement transversal de produits lors de leur déplacement, à savoir servant de butée d'alignement des produits au cours et à la fin de leur déviation. Chaque guide 8 peut également assurer que les produits ne se déportent pas au-delà du bord du dispositif 1 au cours de leur déviation.

Comme visible sur l'exemple de réalisation de la figure 5 et sur l'exemple représente sur la figure 2, le guide 8 s'étend uniquement sur la longueur de l'autre section 3. De plus, le guide 8 est généralement positionné du côté correspondant au sens de déviation.

Selon une autre réalisation, un guide 8 peut s'étendre le long d'une autre section 3 ainsi que le long d'une ou plusieurs des sections 2 situées en amont et/ou en aval. Une telle configuration est visible sur l'exemple de réalisation des figures 3 et 6.

En outre, un guide 8 peut être positionné de chaque côté d'une autre section 3, comme visible sur la figure 6.

Selon un mode de réalisation, ledit guide latéral 8 comprend des moyens de roulement montés libres en rotation ou motorisés dans le sens longitudinal. De tels moyens de roulement assurent un accompagnement des produits venant à son contact, aucun frottement n'interférant avec l'entraînement longitudinal et/ou la déviation.

En outre, lorsqu'il y a plusieurs convoyeurs 6 au sein d'une même autre section 3, ils peuvent avoir une unique motorisation ou bien une motorisation asservie, afin d'assurer la même vitesse de déplacement longitudinal auxdits produits qu'ils transportent et supportant partiellement.

En effet, le dimensionnement transversal d'un convoyeur 6 assure, en fonction du type de produits, mais aussi de leurs dimensions, qu'au moins une partie de chaque produit repose aussi sur au moins une roue mecanum 4 d'au moins un lot 5, de préférence simultanément sur plusieurs roues mecanum 4 de plusieurs lots 5.

A ce titre, les roues mecanum 4 peuvent être en affleurement avec la face supérieure d'un convoyeur 6, comme visible sur l'exemple de la figure 4. Ainsi, un produit transporté par une autre section 3 se retrouve supporté en partie par au moins une roue mecanum 4, de préférence plusieurs simultanément, ainsi qu'éventuellement par la surface d'au moins un convoyeur 6 si un tel convoyeur 6 est situé entre deux lots 5.

Dès lors, comme évoqué précédemment, une autre section 3 de déviation comprend au moins deux lots 5 de roues mecanum 4 orientées identiquement, de manière à constituer une autre section de déviation latérale desdits produits vers la droite ou vers la gauche dudit dispositif 1. Une déviation vers la droite est représentée sur le mode de réalisation de la figure 3 et sur l'exemple représente sur la figure 2, tandis qu'une déviation vers la gauche est représentée sur le figure 5.

De façon alternative, ladite autre section 3 de déviation comprend au moins deux lots 5 de roues mecanum 4 orientées symétriquement, de manière à constituer une autre section 3 de déviation en rotation desdits produits. Une telle configuration est visible sur la figure 6, montrant une paire de lots 5 situés à gauche et avec une première orientation, tandis qu'une autre paire de lots 5 situés à droite présente une autre orientation, notamment opposée, de manière à conférer aux produits une direction de déviation selon un mouvement en rotation.

Comme indiqué ci-dessus, le dispositif 1 comprend un unique moyen de motorisation de l'ensemble des roues mecanum 5 d'une même autre section 3. Pour chaque autre section 3, le dispositif prévoit donc une motorisation distincte, propre à chacune d'entre elles.

Dès lors, il est possible d'appliquer un entraînement en rotation indépendamment à chaque autre section 3, afin de conférer une déviation différente aux produits qui y sont transportés.

En outre, l'actionnement de la motorisation propre à chaque autre section 3 peut s'opérer en continu ou de façon discontinue. Ainsi, lors du transport d'un produit sur ladite autre section 3, l'actionnement de la motorisation de l'autre section 3 peut s'opérer selon une durée et/ou des vitesses configurables, afin d'appliquer la direction de déviation audit produit jusqu'à l'amener dans la position souhaitée.

Les axes de rotation des roues mecanum 4 situées sur une même colonne longitudinale, comme visible sur la figure 2, ou bien sur une même rangée transversale, comme visible sur les figures 3, 5 et 6, sont confondus. Ces axes confondus peuvent être reliés par un même arbre de rotation. Plusieurs arbres relient alors les roues mecanum 4 par colonne ou rangées des différents lots 5 d'une même autre section 3, assurant un entraînement commun en rotation. De plus, les arbres des différentes colonnes ou rangées sont en principe asservis à un même organe de motorisation, assurant alors la même vitesse de rotation appliquée à chaque roue mecanum 4 d'une même autre section 3.

Dès lors, en faisant varier la vitesse d'entraînement en rotation aux lots 5 de roues mecanum 4 d'une même autre section 3, on applique une déviation configurable aux produits, en plus de choisir la vitesse de leur déplacement longitudinal.

Plus avant, dans le cas d'un convoyeur 6 situé entre au moins deux lots 5 d'une autre section 3, il est possible d'appliquer un différentiel entre les vitesses d'entraînement dudit convoyeur 6 par rapport aux roues mecanum 4 des lots 5. Un tel différentiel peut être positif ou négatif, ou bien neutre si le convoyeur 6 est entraîné à la même vitesse que les roues 4. Il est alors possible de régler avec précision les déplacements à appliquer aux produits transportés sur chaque autre section 3.

L'invention concerne aussi un procédé de convoyage de produits au sein d'une ligne de production.

Un tel procédé de convoyage est particulièrement adapté à la mise en œuvre du dispositif de convoyage 1 selon l'invention.

Au cours de ce procédé, au moins on déplace longitudinalement les produits sur au moins une section 2. En particulier, on déplace les produits longitudinalement au niveau d'une section 2 située en amont et/ou d'une section 2 située en aval.

De plus, selon l'invention, on dévie lesdits produits par rapport au déplacement longitudinal sur au moins une autre section 3. Cette déviation s'opère de façon complémentaire au déplacement longitudinal.

On dispose au niveau de ladite autre section 3 d'une pluralité de roues mecanum 4, regroupées de façon compacte par lot 5 de roues mecanum 4 alignées selon une direction perpendiculaire à leur axe de rotation.

On actionne alors les roues mecanum 4 d'une même autre section 3 par un unique moyen de motorisation, à savoir qu'on fait tourner à la même vitesse d'entraînement toutes les roues mecanum 4 d'une même autre section 3.

En référence à la figure 7, plusieurs produits sont transportés successivement par le dispositif 1 de convoyage. Dans cette configuration spécifique non limitative, le dispositif 1 comprend une section 2 en amont déplaçant les produits vers une autre section 3 opérant une déviation transversale, vers la droite, avant d'arriver vers une section 2 intermédiaire sur laquelle les produits sont déplacés uniquement longitudinalement. Ensuite, les produits traversent une autre section 3 de déviation en rotation, par exemple selon un angle de 90 degrés (90°), pour se retrouver en sortie alignés au centre d'une section 2 en aval où il sont de nouveau transportés uniquement longitudinalement.

Ainsi, au travers de l'utilisation de roues mecanum 4 par lots 5 pour le convoyage de produits, l'invention permet d'appliquer une déviation précise auxdits produits, par rapport à leur avancement longitudinal, tout en conservant cet entraînement longitudinal. L'unique motorisation facilite considérablement la fabrication et la maintenance d'un tel dispositif de convoyage, à un coût moindre.

## Revendications

1. Dispositif (1) de convoyage de produits au sein d'une ligne de production, comprenant :
- au moins une section (2) en amont de déplacement longitudinal desdits produits ;
- au moins une autre section (3) de déviation desdits produits selon une direction différente par rapport audit déplacement longitudinal ;
- au moins une section (2) en aval de déplacement longitudinal desdits produits ;
ladite autre section (3) comprend une pluralité de roues mecanum (4), regroupées de façon compacte par lot (5) de roues (4) alignées selon une direction perpendiculaire à leur axe de rotation ;
- lesdites roues (4) d'un même lot (5) étant orientées de façon identique ;
- le dispositif (1) comprend un unique moyen de motorisation de l'ensemble des roues mécanum (4) d'une même autre section (3) ;
**caractérisé en ce qu'**au moins deux lots (5) d'une même autre section (3) sont séparés transversalement par au moins un convoyeur longitudinal (6).

2. Dispositif (1) de convoyage selon la revendication 1, **caractérisé en ce que** ladite autre section (3) de déviation comprend au moins deux lots (5) de roues mecanum (4) orientées identiquement, de manière à constituer une autre section (3) de déviation latérale desdits produits vers la droite ou vers la gauche dudit dispositif (1).

3. Dispositif (1) de convoyage selon la revendication 1, **caractérisé en ce que** ladite autre section (3) de déviation comprend au moins deux lots (5) de roues mecanum (4) orientées symétriquement, de manière à constituer une autre section (3) de déviation en rotation desdits produits.

4. Dispositif (1) de convoyage selon l'une quelconque des revendications précédentes, **caractérisé par** en ce qu'il comprend plusieurs autres sections (3) de déviation différentes et indépendantes.

5. Dispositif (1) de convoyage selon l'une quelconque des revendications précédentes, **caractérisé en ce que** l'axe des roues mecanum (4) d'une autre section (3) est orthogonal ou aligné avec la direction du déplacement longitudinal.

6. Dispositif (1) de convoyage selon l'une quelconque des revendications précédentes, **caractérisé en ce que** plusieurs roues (4) de lots (5) différents sont contiguës le long de leur axe de rotation.

7. Dispositif (1) de convoyage selon l'une quelconque des revendications 1 à 5 , **caractérisé en ce que** ledit convoyeur longitudinal (6) comprend un tapis pourvu de rouleaux (7) montés libres en rotation et dont les axes de rotation sont orientés longitudinalement.

8. Dispositif (1) de convoyage selon l'une quelconque des revendications précédentes, **caractérisé en ce qu'**il comprend au moins un guide (8) latéral de glissement desdits produits.

9. Procédé de convoyage de produits au sein d'une ligne de production, dans lequel, au moins :
- on déplace longitudinalement les produits sur au moins une section (2) amont ;
- on dévie lesdits produits par rapport au déplacement longitudinal sur au moins une autre section (3) ;
- on déplace longitudinalement les produits sur au moins une section (2) aval ;
- on dispose au niveau de ladite autre section (3) d'une pluralité de roues mecanum (4), regroupées de façon compacte par lot (5) de roues (4) alignées selon une direction perpendiculaire à leur axe de rotation ;
- on actionne les roues mecanum (4) d'une même autre section (3) par un unique moyen de motorisation ;
**caractérisé en ce qu'**au **moins deux lots (5) d'une même autre section (3) sont séparés transversalement par au moins un convoyeur longitudinal (6).**

## Patentansprüche

1. Vorrichtung (1) zum Fördern von Produkten innerhalb einer Produktionslinie, beinhaltend:
- mindestens einen stromaufwärtigen Abschnitt (2) zur Längsbewegung der Produkte;
- mindestens einen anderen Abschnitt (3) zum Umlenken der Produkte in einer Richtung, die sich von der Längsbewegung unterscheidet;
- mindestens einen stromabwärtigen Abschnitt (2) zur Längsbewegung der Produkte;
wobei der andere Abschnitt (3) eine Vielzahl von Mecanum-Rädern (4) beinhaltet, die in einem Satz (5) von Rädern (4), die in einer zu ihrer Drehachse senkrechten Richtung ausgerichtet sind, kompakt gruppiert sind;
- wobei die Räder (4) eines gleichen Satzes (5) identisch orientiert sind;
- wobei die Vorrichtung (1) ein einziges Antriebsmittel für die Gesamtheit der Mecanum-Räder (4) eines gleichen anderen Abschnitts (3) beinhaltet;
**dadurch gekennzeichnet, dass** mindestens zwei Sätze (5) eines gleichen anderen Abschnitts (3) durch mindestens einen Längsförderer (6) in Querrichtung getrennt sind.

2. Vorrichtung (1) zum Fördern nach Anspruch 1, **dadurch gekennzeichnet, dass** der andere Abschnitt (3) zum Umlenken mindestens zwei Sätze (5) von Mecanum-Rädern (4), die identisch orientiert sind, beinhaltet, um einen anderen Abschnitt (3) zum seitlichen Umlenken der Produkte zur rechten oder zur linken Seite der Vorrichtung (1) zu bilden.

3. Vorrichtung (1) zum Fördern nach Anspruch 1, **dadurch gekennzeichnet, dass** der andere Abschnitt (3) zum Umlenken mindestens zwei Sätze (5) von Mecanum-Rädern (4), die symmetrisch orientiert sind, beinhaltet, um einen anderen Abschnitt (3) zum Drehumlenken der Produkte zu bilden.

4. Vorrichtung (1) zum Fördern nach einem der vorhergehenden Ansprüche, **dadurch gekennzeichnet, dass** sie mehrere andere Abschnitte (3) zum Umlenken beinhaltet, die unterschiedlich und unabhängig sind.

5. Vorrichtung (1) zum Fördern nach einem der vorhergehenden Ansprüche, **dadurch gekennzeichnet, dass** die Achse der Mecanum-Räder (4) eines anderen Abschnitts (3) orthogonal zu der Richtung der Längsbewegung oder nach dieser ausgerichtet ist.

6. Vorrichtung (1) zum Fördern nach einem der vorhergehenden Ansprüche, **dadurch gekennzeichnet, dass** mehrere Räder (4) unterschiedlicher Sätze (5) entlang ihrer Drehachse aneinandergrenzen.

7. Vorrichtung (1) zum Fördern nach einem der Ansprüche 1 bis 5, **dadurch gekennzeichnet, dass** der Längsförderer (6) ein Band beinhaltet, das über Rollen (7) verfügt, die frei drehbar montiert sind und deren Drehachsen längs orientiert sind.

8. Vorrichtung (1) zum Fördern nach einem der vorhergehenden Ansprüche, **dadurch gekennzeichnet, dass** sie mindestens eine seitliche Gleitführung (8) für die Produkte beinhaltet.

9. Verfahren zum Fördern von Produkten innerhalb einer Produktionslinie, wobei mindestens:
- die Produkte auf mindestens einem stromaufwärtigen Abschnitt (2) längs bewegt werden;
- die Produkte auf mindestens einem anderen Abschnitt (3) in Bezug auf die Längsbewegung umgelenkt werden;
- die Produkte auf mindestens einem stromabwärtigen Abschnitt (2) längs bewegt werden;
- im Bereich des anderen Abschnitts (3) eine Vielzahl von Mecanum-Rädern (4) bereitgestellt sind, die in einem Satz (5) von Rädern (4), die in einer zu ihrer Drehachse senkrechten Richtung ausgerichtet sind, kompakt gruppiert sind;
- die Mecanum-Räder (4) eines gleichen anderen Abschnitts (3) durch ein einziges Antriebsmittel betätigt werden;
**dadurch gekennzeichnet, dass** mindestens zwei Sätze (5) eines gleichen anderen Abschnitts (3) durch mindestens einen Längsförderer (6) in Querrichtung getrennt sind.

## Claims

1. Device (1) for conveying products within a production line, comprising:
- at least one upstream section (2) for moving said products longitudinally;
- at least one other section (3) for deflecting said products in a different direction with respect to said longitudinal movement;
- at least one downstream section (2) for moving said products longitudinally;
said other section (3) comprises a plurality of Mecanum wheels (4), which are compactly grouped into batches (5) of wheels (4) aligned in a direction perpendicular to their axis of rotation;
- said wheels (4) of the same batch (5) being oriented identically;
- the device (1) comprises a single means for driving all of the Mecanum wheels (4) of the same other section (3);
**characterized in that** at least two batches (5) of the same other section (3) are separated transversely by at least one longitudinal conveyor (6).

2. Conveying device (1) according to Claim 1, **characterized in that** said deflecting other section (3) comprises at least two batches (5) of identically oriented Mecanum wheels (4), so as to form another section (3) for laterally deflecting said products to the right or to the left of said device (1).

3. Conveying device (1) according to Claim 1, **characterized in that** said deflecting other section (3) comprises at least two batches (5) of symmetrically oriented Mecanum wheels (4), so as to form another section (3) for rotationally deflecting said products.

4. Conveying device (1) according to any one of the preceding claims, **characterized in that** it comprises a plurality of different and independent deflecting other sections (3).

5. Conveying device (1) according to any one of the preceding claims, **characterized in that** the axis of the Mecanum wheels (4) of another section (3) is orthogonal or aligned with the direction of the longitudinal movement.

6. Conveying device (1) according to any one of the preceding claims, **characterized in that** a plurality of wheels (4) of different batches (5) are adjacent along their axis of rotation.

7. Conveying device (1) according to any one of Claims 1 to 5, **characterized in that** said longitudinal conveyor (6) comprises a belt provided with rollers (7) mounted so as to rotate freely and the axes of rotation of which are oriented longitudinally.

8. Conveying device (1) according to any one of the preceding claims, **characterized in that** it comprises at least one sliding lateral guide (8) for said products.

9. Method for conveying products within a production line, wherein, at least:
- the products are moved longitudinally over at least one upstream section (2);
- said products are deflected with respect to the longitudinal movement on at least one other section (3);
- the products are moved longitudinally over at least one downstream section (2);
- a plurality of Mecanum wheels (4), which are compactly grouped into batches (5) of wheels (4) aligned in a direction perpendicular to their axis of rotation, are arranged in said other section (3);
- the Mecanum wheels (4) of the same other section (3) are actuated by a single drive means;
**characterized in that** at least two batches (5) of the same other section (3) are separated transversely by at least one longitudinal conveyor (6).
